# EUROPÄISCHE PATENTSCHRIFT

(11) **EP 2 957 025 B1**
(45) Veröffentlichungstag und Bekanntmachung des Hinweises auf die Patenterteilung: **15.03.2017**
(21) Anmeldenummer: 14700448.5
(22) Anmeldetag: 09.01.2014
(51) Int. Cl.: H02K 15/00, H02K 17/16

(54) **KURZSCHLUSSKÄFIG FÜR EINEN KURZSCHLUSSLÄUFER UND HERSTELLUNGSVERFAHREN**
SQUIRREL CAGE FOR A SQUIRREL-CAGE ROTOR, AND PRODUCTION METHOD
CAGE EN COURT-CIRCUIT POUR ROTOR EN COURT-CIRCUIT ET PROCÉDÉ DE RÉALISATION

(30) Priorität: 14.02.2013 DE 102013202404
(43) Veröffentlichungstag der Anmeldung: 23.12.2015
(73) Patentinhaber: Robert Bosch GmbH, 70442 Stuttgart (DE)
(72) Erfinder: DILLMANN, Christian, 30823 Garbsen (DE); ZEADAN, Jeihad, B-4728 Kelmis (BE)
(86) Internationale Anmeldenummer: PCT/EP2014/050259
(87) Internationale Veröffentlichungsnummer: WO 2014/124763

(56) Entgegenhaltungen:
- DE-A1- 19 858 138
- DE-A1-102005 030 798

## Beschreibung

### Gebiet der Erfindung

Die Erfindung betrifft einen Kurzschlusskäfig für einen Kurzschlussläufer und ein Verfahren zum Herstellen eines Kurzschlusskäfigs für einen Kurzschlussläufer.

### Stand der Technik

Als Kurzschlussläufer werden die Läufer bzw. Rotoren von Asynchronmotoren bezeichnet, welche einen dauernd kurzgeschlossenen Käfig besitzen. Dabei wird eine Mehrzahl von Käfigstäben, welche sich in axialer Richtung des Käfigs erstrecken und entlang einer Umlaufrichtung des Käfigs angeordnet sind, mittels zweier Kurzschlussringe verbunden.

Die Käfigstäbe können dabei beispielsweise mittels Laserschweißen mit dem Kurzschlussring verbunden werden.

DE 198 58 138 A1 beschreibt einen Käfigläufer für elektrische Maschinen und ein Herstellungsverfahren desselben. Die Käfigstäbe werden nach dem Fügen in ein Läuferblechpaket plastisch verformt und werden anschließend durch Schweißen oder Löten mit dem Läuferblechpaket mechanisch und elektrisch verbunden.

DE 10 2005 030 798 A1 beschreibt einen Läufer einer Asynchronmaschine, welcher ein Blechpaket mit Nuten zur Aufnahme von Kurzschlussstäben aufweist, die an den Stirnseiten des Läufers jeweils durch einen Kurzschlussring verbunden sind und mit diesem mittels einer Lötverbindung verbunden sind. Im Bereich der Kurzschlussringe sind Formbleche vorhanden, die der Paketierung des Blechpakets sowie der Aufnahme der Fliehkräfte des Kurzschlussringes dienen.

### Zusammenfassung der Erfindung

Mit der Erfindung wird ein Kurzschlusskäfig angegeben, welcher sich durch einen reduzierten elektrischen Übergangswiderstand zwischen den Käfigstäben und einem Kurzschlussring sowie einer erhöhten mechanischen Festigkeit der Verbindung zwischen den Käfigstäben und dem Kurzschlussring kennzeichnet. Weiterhin wird ein Verfahren bereitgestellt, welches die Herstellung eines Kurzschlusskäfigs mit reduziertem Arbeits- und Energieaufwand ermöglicht.

Es ist ein Kurzschlusskäfig für einen Kurzschlussläufer und ein Verfahren zum Herstellen eines Kurzschlusskäfigs gemäß den Merkmalen der unabhängigen Patentansprüche angegeben. Weiterbildungen der Erfindung ergeben sich aus den abhängigen Ansprüchen und aus der folgenden Beschreibung.

Viele der im Folgenden im Hinblick auf den Kurzschlusskäfig beschriebenen Merkmale lassen sich auch als Verfahrensschritte implementieren und umgekehrt.

Gemäß einem ersten Aspekt ist ein Kurzschlusskäfig für einen Kurzschlussläufer angegeben. Der Kurzschlusskäfig weist eine Mehrzahl von Käfigstäben, welche in axialer Richtung des Kurzschlusskäfigs verlaufen, und einen ersten Kurzschlussring auf, wobei zumindest ein Käfigstab der Mehrzahl von Käfigstäben an einem ersten Ende über eine mechanische Verbindung mit dem ersten Kurzschlussring verbunden ist. Der Kurzschlusskäfig ist dadurch gekennzeichnet, dass die mechanische Verbindung zumindest eines Käfigstabs der Mehrzahl von Käfigstäben mit dem ersten Kurzschlussring einen ersten Verbindungsabschnitt und einen zweiten Verbindungsabschnitt aufweist, wobei der erste Verbindungsabschnitt eine Schweißverbindung und der zweite Verbindungsabschnitt eine Lötverbindung ist.

Durch das Bereitstellen einer Verbindung zwischen dem Käfigstab und dem Kurzschlussring mit zwei Verbindungsabschnitten kann die Festigkeit der Verbindung zwischen Käfigstab und Kurzschlussring insbesondere dann erhöht werden, wenn die Eindringtiefe einer Schweißverbindung an den Verbindungsstellen zwischen dem Käfigstab und dem Kurzschlussring geringer ist als die Materialdicke des Kurzschlussrings, so dass eine stoffschlüssige Verbindung lediglich über einen Teil der Kontaktfläche zwischen dem Käfigstab und dem Kurzschlussring hergestellt wird. Derjenige Teil der Kontaktfläche zwischen Käfigstab und Kurzschlussring, an welchem keine stoffschlüssige Verbindung zwischen dem Käfigstab und dem Kurzschlussring hergestellt wird, kann weder zu einer Verbesserung der mechanischen Festigkeit noch zu einer Erhöhung der elektrischen Leitfähigkeit der Verbindung zwischen Käfigstab und Kurzschlussring beitragen. Die Erfindung kombiniert in einer Ausführungsform eine Schweißverbindung und eine Lötverbindung so, dass eine Verbindung zwischen einem Käfigstab und einem Kurzschlussring über die gesamte Kontaktfläche zwischen diesen beiden hergestellt wird, ohne dabei eine Schweißverbindung mit hohem energetischem Aufwand herstellen zu müssen, da diejenigen Abschnitte der Kontaktfläche zwischen Käfigstab und Kurzschlussring, in welche die Schweißverbindung nicht vordringt, mittels einer Lötverbindung stoffschlüssig miteinander verbunden werden.

Die Schweißverbindung im ersten Verbindungsabschnitt kann dabei ohne Materialzusatz unter einer Temperatur erfolgen, die höher ist als die Schmelzpunkte der Materialien des Käfigstabs und des Kurzschlussrings. Die Lötverbindung des zweiten Verbindungsabschnitts kann in einer Ausführungsform eine Hartlötverbindung sein, welche unter Zugabe eines Materialzusatzes bei einer Temperatur erfolgt, welche niedriger als die Schweißtemperatur und niedriger als die Schmelztemperatur zumindest eines der Materialien des Käfigstabs und des Kurzschlussrings ist.

Mit zunehmender gewünschter Eindringtiefe einer Schweißverbindung an der Verbindungs- oder Nahtstelle zwischen zwei Materialien wird der Energieaufwand zum Herstellen dieser Schweißverbindung zunehmend höher. Durch das Bereitstellen einer kombinierten Schweiß-/Lötverbindung zwischen einem Käfigstab und dem Kurzschlussring eines Kurzschlusskäfigs wird das Herstellen einer mechanischen Verbindung zwischen diesen beiden Bauteilen mit einem reduzierten Energieaufwand ermöglicht.

Gemäß einer Ausführungsform ist der erste Verbindungsabschnitt in axialer Richtung zwischen dem zweiten Verbindungsabschnitt und einer Stirnfläche des ersten Endes des zumindest einen Käfigstabs angeordnet.

Diese Anordnung der beiden Verbindungsabschnitte kann es im Rahmen der Herstellung des Kurzschlusskäfigs ermöglichen, ein Schweißwerkzeug einfacher an die vorgesehene Stelle der Schweißverbindung, nämlich ausgehend von einer Stirnfläche des zu befestigenden Endes des Käfigstabs, anzusetzen.

Gemäß einer weiteren Ausführungsform grenzt der zweite Verbindungsabschnitt in axialer Richtung des Käfigstabs unmittelbar an den ersten Verbindungsabschnitt an.

In anderen Worten gehen also der erste Verbindungsabschnitt und der zweite Verbindungsabschnitt nahtlos ineinander über. Damit befindet sich zwischen dem ersten Verbindungsabschnitt und dem zweiten Verbindungsabschnitt gerade keine Kontaktfläche zwischen dem Käfigstab und dem Kurzschlussring, welche nicht zu der stoffschlüssigen Verbindung zwischen Käfigstab und Kurzschlussring beiträgt. In anderen Worten wird die mechanische Verbindung in axialer Richtung bestehend aus dem ersten und zweiten Verbindungsabschnitt unterbrechungsfrei bzw. durchgehend zwischen dem Käfigstab und dem Kurzschlussring hergestellt.

Gemäß einer weiteren Ausführungsform grenzt der erste Verbindungsabschnitt unmittelbar an eine Stirnfläche des ersten Endes des zumindest einen Käfigstabs an.

Damit kann beispielsweise das Schweißwerkzeug zum Herstellen der Schweißverbindung an der Stirnfläche des Käfigstabs angesetzt werden, so dass ein einfaches Herstellen der Schweißverbindung möglich ist.

Gemäß einer weiteren Ausführungsform schließt eine Stirnfläche des ersten Kurzschlussrings mit einer Stirnfläche des ersten Endes des zumindest einen Käfigstabs in axialer Richtung bündig ab.

Diese Ausführungsform ermöglicht insbesondere das einfache Herstellen der Schweißverbindung mittels eines Reibschweißverfahrens, da ein entsprechendes Werkzeug an die Stirnflächen sowohl des Käfigstabs als auch des Kurzschlussrings angesetzt werden kann.

Gemäß einer weiteren Ausführungsform ist die mechanische Verbindung derart ausgeführt, dass eine Verbindungsfläche einer Mantelfläche des zumindest einen Käfigstabs mit einem Fügeabschnitt einer Innenfläche in einer Ausnehmung des ersten Kurzschlussrings stoffschlüssig verbunden ist.

In anderen Worten ist also die Außenfläche bzw. ein Teil der Außenfläche des Käfigstabs mit einer Innenfläche einer Ausnehmung des Kurzschlussrings verbunden.

In einer Ausführungsform handelt es sich bei der Ausnehmung um einen Durchbruch in dem Kurzschlussring in axialer Richtung. In Abhängigkeit der Materialdicke des Kurzschlussrings in axialer Richtung kann eine Verbindung zwischen der Innenfläche der Ausnehmung und dem Käfigstab mittels einer Schweißverbindung nur in begrenzter Eindringtiefe ermöglicht werden. Der über diese Eindringtiefe hinausgehende Fügeabschnitt der Innenfläche wird mittels einer Lötverbindung mit dem Käfigstab stoffschlüssig verbunden.

Gemäß einem weiteren Aspekt ist ein Verfahren zum Herstellen eines Kurzschlusskäfigs für einen Kurzschlussläufer angegeben. Das Verfahren weist auf: Anordnen zumindest eines Käfigstabs in einer Ausnehmung eines Kurzschlussrings; Herstellen einer Lötverbindung zwischen dem zumindest einen Käfigstab und dem Kurzschlussring in einem zweiten Verbindungsabschnitt; Herstellen einer Schweißverbindung zwischen dem zumindest einen Käfigstab und dem Kurzschlussring in einem ersten Verbindungsabschnitt.

Wie bereits weiter oben dargestellt, ermöglicht die Kombination einer Löt- und Schweißverbindung das Herstellen einer stoffschlüssigen Verbindung zwischen einem Käfigstab und einem Kurzschlussring mit hoher elektrischer Leitfähigkeit unter möglichst geringem energetischem Aufwand für das Herstellen dieser Verbindung.

Gemäß einer Ausführungsform wird die Lötverbindung mittels eines Hartlötverfahrens hergestellt.

Gemäß einer weiteren Ausführungsform wird die Schweißverbindung mittels Reibschweißen hergestellt.

Das Reibschweißen ist ein Wärmeschweißverfahren, bei dem die zum Schweißen benötigte Wärme durch eine Relativbewegung und Druck erzeugt wird. Zum Herstellen einer Reibschweißverbindung sind weder Zusatzstoffe noch Schutzgase erforderlich. Reibschweißen eignet sich zum Herstellen einer stoffschlüssigen Verbindung zwischen Aluminium, Stahl oder Kupfer sowie Legierungen hiervon. Damit kann der Kurzschlusskäfig eines dieser Materialien oder andere für das Reibschweißverfahren geeignete Materialien aufweisen.

Die Kombination einer Schweiß- und einer Lötverbindung ermöglicht das Herstellen einer stoffschlüssigen Verbindung über die gesamte Innenfläche eines Durchbruchs des Kurzschlussrings mit einem Käfigstab, so dass der elektrische Kontaktwiderstand möglichst gering gehalten wird und die mechanische Festigkeit der Verbindung möglichst groß ist.

Gemäß einer weiteren Ausführungsform wird die für das Herstellen der Lötverbindung benötigte Temperatur durch das Herstellen der Schweißverbindung bereitgestellt.

Naturgemäß fällt beim Herstellen der Schweißverbindung eine hohe Temperatur an, welche beim Herstellen des Kurzschlusskäfigs wie oben und im Folgenden beschrieben in vorteilhafter Weise für das gleichzeitige Herstellen der Lötverbindung genutzt werden kann.

Damit kann das Herstellungsverfahren des Kurzschlusskäfigs verkürzt und unter Aufwendung geringerer Energie durchgeführt werden, da der Energieaufwand für das Herstellen der Schweißverbindung auch zum Herstellen der Lötverbindung genutzt werden kann.

Gemäß einer weiteren Ausführungsform wird der zweite Verbindungsabschnitt vor dem Herstellen der Lötverbindung mit einem Lötüberzug versehen.

Bei dem Lötüberzug handelt es sich um einen Materialzusatz, der das Herstellen der Lötverbindung ermöglicht. Der Lötüberzug kann in einer Ausführungsform als Lötfolie ausgeführt sein. Alternativ kann der Lötüberzug an dem zweiten Verbindungsabschnitt vor dem Anordnen des zumindest einen Käfigstabs in einer Ausnehmung des Kurzschlussrings angeordnet werden. Beispielsweise kann eine Lötfolie vor dem Fügen des Käfigstabs mit dem Kurzschlussring an dem Käfigstab angebracht werden und mitsamt des Käfigstabs in die Ausnehmung des Kurzschlussrings geschoben bzw. gefügt werden.

Gemäß einer weiteren Ausführungsform wird eine Stirnfläche des zumindest einen Käfigstabs vor dem Herstellen der Schweißverbindung mit einer Stirnfläche des Kurzschlussrings bündig angeordnet.

Das Herstellen dieser bündigen Anordnung der Stirnflächen des Käfigstabs und des Kurzschlussrings kann durch ein Verschieben des Käfigstabs in axialer Richtung oder durch materialabtragende Verfahren, welche auf das Ende des Käfigstabs bzw. auf die Stirnfläche des Käfigstabs angewandt werden, erfolgen. Beispielsweise kann die Stirnfläche des Käfigstabs durch Reiben so bearbeitet werden, dass sie bündig mit der Stirnfläche des Kurzschlussrings abschließt. In anderen Worten sind also die Stirnflächen des Käfigstabs und des Kurzschlussrings in axialer Richtung des Käfigstabs auf gleicher Höhe.

Im Folgenden werden mit Verweis auf die Figuren Ausführungsbeispiele der Erfindung beschrieben.

### Kurze Beschreibung der Zeichnungen

Fig. 1 zeigt eine schematische isometrische Darstellung eines Kurzschlusskäfigs gemäß einem Ausführungsbeispiel.
Fig. 2 zeigt eine schematische, Teilschnittdarstellung von Elementen eines Kurzschlusskäfigs gemäß einem weiteren Ausführungsbeispiel.
Fig. 3 zeigt eine schematische Schnittdarstellung eines Kurzschlusskäfigs gemäß einem weiteren Ausführungsbeispiel.
Fig. 4 zeigt eine schematische Darstellung der Verfahrensschritte eines Verfahrens gemäß einem weiteren Ausführungsbeispiel.

Die Darstellungen in den Figuren sind schematisch und nicht maßstabsgetreu. Werden in der folgenden Figurenbeschreibung gleiche Bezugsziffern verwendet, so betreffen diese gleiche oder ähnliche Elemente.

### Ausführungsformen der Erfindung

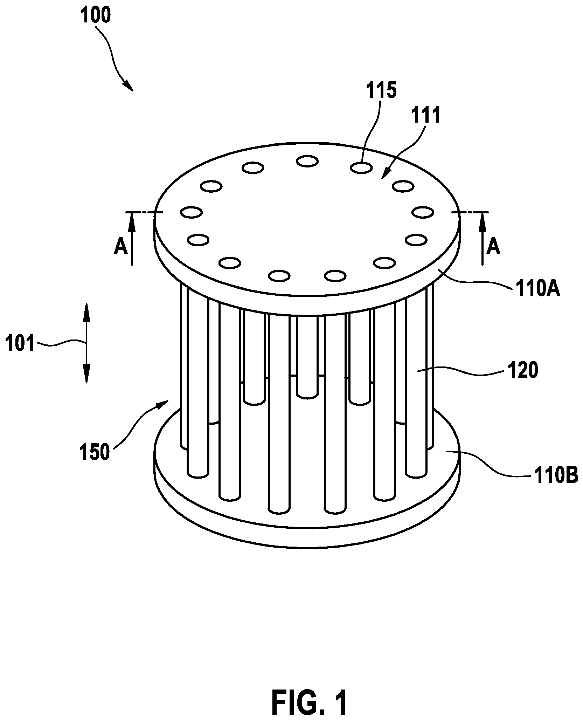

Fig. 1 zeigt einen Kurzschlusskäfig 100 mit einem ersten Kurzschlussring 110A und einem zweiten Kurzschlussring 110B, welche in axialer Richtung 101 des Kurzschlusskäfigs gegenüberliegend angeordnet sind, wobei eine Mehrzahl von Käfigstäben 120, die in axialer Richtung 101 verlaufen und entlang einer Umfangsrichtung des Kurzschlusskäfigs 100 nebeneinander angeordnet sind, mit ihren Enden mit jeweils einem Kurzschlussring verbunden sind. Dabei ist jeweils ein Ende eines Käfigstabs 120 in einem Durchbruch 115 in axialer Richtung 101 angeordnet und stoffschlüssig mit dem Kurzschlussring verbunden.

Die Stirnflächen 111 des ersten Kurzschlussrings 110A und des zweiten Kurzschlussrings 110B verlaufen parallel zueinander und die Käfigstäbe 120 sind orthogonal zu den Stirnflächen 111 der Kurzschlussringe angeordnet.

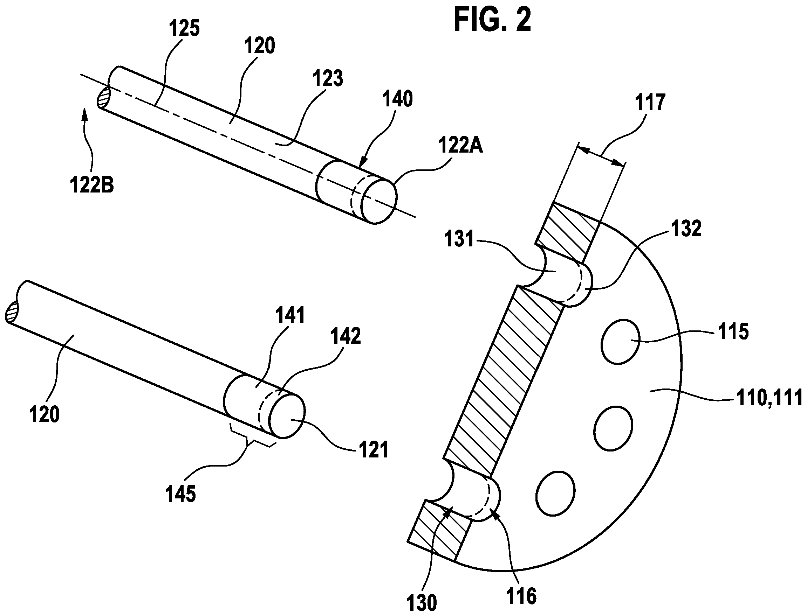

Fig. 2 stellt den Aufbau der mechanischen Verbindung zwischen einem Käfigstab 120 und dem Kurzschlussring 110 dar. Ein Käfigstab verfügt über ein erstes Ende 122A und ein zweites Ende 122B sowie eine Stirnfläche 121 an jedem der Enden 122A, 122B. Der Fügeabschnitt 140 des Käfigstabs 120 ist an jedem der beiden Enden 122A, 122B zum Verbinden mit dem ersten bzw. zweiten Kurzschlussring 110A, 110B angeordnet. Der Fügeabschnitt 140 weist dabei eine Länge 145 in axialer Richtung des Käfigstabs 120 auf, wobei die axiale Richtung des Käfigstabs von der Mittelachse 125 des Käfigstabs in Längsrichtung dargestellt wird. Weiterhin weist der Fügeabschnitt 140 einen ersten Fügeteilabschnitt 141 und einen zweiten Fügeteilabschnitt 142 auf.

Weiterhin ist der Fig. 2 eine Schnittdarstellung eines Kurzschlussrings 110 zu entnehmen, welche den Querschnitt von zwei den Käfigstäben zugeordneten Ausnehmungen 115 zeigt. Die Innenfläche 116 der Ausnehmung bildet eine Verbindungsfläche 130, welche eine erste Verbindungsteilfläche 131 und eine zweite Verbindungsteilfläche 132 aufweist. Die Verbindungsfläche 130 kann so gestaltet sein, dass sie sich über die gesamte Materialdicke 117 oder einen Teil des Längsabschnitts dieser Materialdicke in axialer Richtung des Kurzschlussrings erstreckt.

Die Materialdicke 117 kann beispielsweise 25 mm betragen, wobei die Länge der zweiten Verbindungsteilfläche 132 in axialer Richtung 125 der Käfigstäbe 4 mm betragen kann. Damit könnte die Länge der ersten Verbindungsteilfläche 131 in axialer Richtung bis zu 21 mm betragen und somit eine möglichst große Kontaktfläche zwischen einem Käfigstab und dem Kurzschlussring ermöglichen.

Beim Verbinden eines Käfigstabs 120 mit dem Kurzschlussring 110 bilden der erste Fügeteilabschnitt 141 und die erste Verbindungsteilfläche 131 den ersten Verbindungsabschnitt, d. h. die Lötverbindung, wobei der zweite Fügeteilabschnitt 142 und die zweite Verbindungsteilfläche 132 den zweiten Verbindungsabschnitt bilden, welcher eine Schweißverbindung ist.

Es sei darauf hingewiesen, dass die Käfigstäbe 120 und die Ausnehmungen 115 einen Querschnitt von beliebiger geometrischer Form aufweisen können. Sowohl die Käfigstäbe als auch die Ausnehmungen sind nicht auf einen kreisförmigen Querschnitt, wie dieser in den Figuren gezeigt ist, beschränkt.

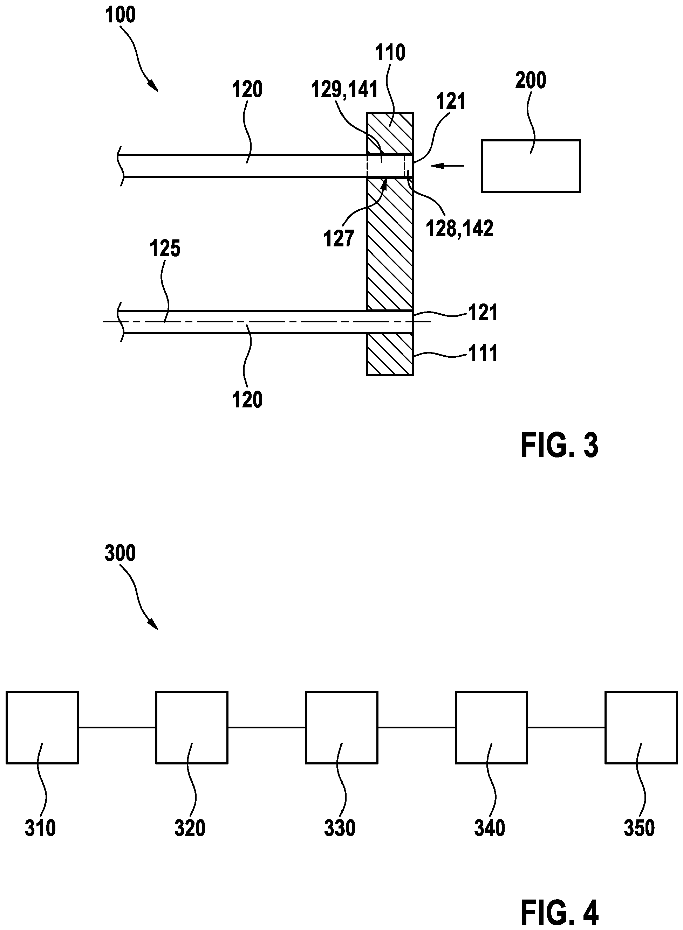

Fig. 3 zeigt einen Kurzschlusskäfig 100 während des Herstellens einer stoffschlüssigen Verbindung zwischen einem Käfigstab 120 und dem Kurzschlussring 110. Die Schnittdarstellung des Kurzschlusskäfigs 100 entspricht der Darstellung entlang der Schnittlinie A-A, welche in Fig. 1 gezeigt ist.

Die Käfigstäbe 120 sind in den Ausnehmungen bzw. Durchbrüchen des Kurzschlussrings angeordnet, wobei die Stirnfläche 121 der Käfigstäbe mit der Stirnfläche 111 des Kurzschlussrings 110 bündig abschließt. Eine Schweißvorrichtung bzw. ein Schweißwerkzeug 200 wird auf die bündig miteinander abschließenden Stirnflächen 111, 121 aufgesetzt und stellt so eine Schweißverbindung im ersten Verbindungsabschnitt 128 her. Im zweiten Verbindungsabschnitt 129 kann zeitgleich durch die beim Schweißen anfallende Temperatur eine Lötverbindung zwischen dem Käfigstab und dem Kurzschlussring hergestellt werden.

Fig. 4 zeigt eine schematische Darstellung von Verfahrensschritten des Verfahrens 300 zum Herstellen eines Kurzschlusskäfigs für einen Kurzschlussläufer.

In einem Schritt 310 werden die Käfigstäbe 120 in Form eines Lamellenpaketes 150 gefügt und mit Bezug zueinander und zu dem Lamellenpaket fixiert.

In einem Schritt 320 werden zumindest die zweiten Verbindungsabschnitte 129 an sämtlichen Enden eines Käfigstabs mit einem Lötüberzug oder mit einer Lötfolie versehen.

In einem Schritt 330 wird das Lamellenpaket mit den Käfigstäben in die Ausnehmungen des ersten Kurzschlussrings und des zweiten Kurzschlussrings gefügt.

In einem Schritt 340 werden die Enden der Stäbe bündig mit einer Stirnfläche des Kurzschlussrings angeordnet bzw. durch materialabtragende Verfahren bündig gerieben oder geschliffen.

In einem Schritt 350 werden die Käfigstäbe mittels eines Reibschweißverfahrens verschweißt und mittels der dadurch entstandenen Wärme gleichzeitig hartverlötet, wobei die Schweißverbindung in dem ersten Verbindungsabschnitt und die Lötverbindung in dem zweiten Verbindungsabschnitt hergestellt wird.

Es sei darauf hingewiesen, dass die Löt- und Schweißverbindungen zeitgleich oder nacheinander hergestellt werden können. Weiterhin können ein Käfigstab oder mehrere Käfigstäbe in einem Arbeitsschritt mit dem Kurzschlussring stoffschlüssig verbunden werden.

Der Kurzschlusskäfig und das Verfahren zum Herstellen desselben wie oben und im Folgenden beschrieben ermöglichen das Bereitstellen einer maximalen Anbindungsfläche zwischen einem Käfigstab und einem Durchbruch in einem Kurzschlussring, einen minimalen elektrischen Kontaktwiderstand sowie eine vereinfachte und beschleunigte Herstellung des Kurzschlusskäfigs.

## Patentansprüche

1. Kurzschlusskäfig (100) für einen Kurzschlussläufer, der Kurzschlusskäfig (100) aufweisend:
eine Mehrzahl von Käfigstäben (120), welche in axialer Richtung (101) des Kurzschlusskäfigs verlaufen;
einen ersten Kurzschlussring (110A);
wobei zumindest ein Käfigstab (120) der Mehrzahl von Käfigstäben (120) an einem ersten Ende (122A) über eine mechanische Verbindung (127) mit dem ersten Kurzschlussring (110A) verbunden ist;
**dadurch gekennzeichnet, dass**
die mechanische Verbindung (127) zumindest eines Käfigstabs (120) der Mehrzahl von Käfigstäben (120) mit dem ersten Kurzschlussring (110A) einen ersten Verbindungsabschnitt (128) und einen zweiten Verbindungsabschnitt (129) aufweist;
wobei der erste Verbindungsabschnitt (128) eine Schweißverbindung und
der zweite Verbindungsabschnitt (129) eine Lötverbindung ist.

2. Kurzschlusskäfig (100) nach Anspruch 1,
wobei der erste Verbindungsabschnitt (128) in axialer Richtung (101) zwischen dem zweiten Verbindungsabschnitt (129) und einer Stirnfläche (121) des ersten Endes (122A) des zumindest einen Käfigstabs (120) angeordnet ist.

3. Kurzschlusskäfig (100) nach einem der Ansprüche 1 oder 2,
wobei der zweite Verbindungsabschnitt (129) in axialer Richtung (101) des Käfigstabs (120) unmittelbar an den ersten Verbindungsabschnitt (128) angrenzt.

4. Kurzschlusskäfig (100) nach einem der vorhergehenden Ansprüche, wobei der erste Verbindungsabschnitt (128) unmittelbar an eine Stirnfläche (121) des ersten Endes (122A) des zumindest einen Käfigstabs (120) angrenzt.

5. Kurzschlusskäfig (100) nach einem der vorhergehenden Ansprüche, wobei eine Stirnfläche (111) des ersten Kurzschlussrings (110A) mit einer Stirnfläche (121) des ersten Endes (122A) des zumindest einen Käfigstabs (120) in axialer Richtung (101) bündig abschließt.

6. Kurzschlusskäfig (100) nach einem der vorhergehenden Ansprüche,
wobei die mechanische Verbindung (127) derart ausgeführt ist, dass eine Verbindungsfläche (130) einer Mantelfläche (123) des zumindest einen Käfigstabs (120) mit einem Fügeabschnitt (140) einer Innenfläche (116) in einer Ausnehmung (115) des ersten Kurzschlussrings (110A) stoffschlüssig verbunden ist.

7. Verfahren (300) zum Herstellen eines Kurzschlusskäfigs (100) für einen Kurzschlussläufer, das Verfahren aufweisend:
Anordnen zumindest eines Käfigstabs (120) in einer Ausnehmung (115) eines Kurzschlussrings (110A);
Herstellen einer Lötverbindung zwischen dem zumindest einen Käfigstab (120) und dem Kurzschlussring (110A) in einem zweiten Verbindungsabschnitt (129);
Herstellen einer Schweißverbindung zwischen dem zumindest einen Käfigstab (120) und dem Kurzschlussring (110A) in einem ersten Verbindungsabschnitt (128).

8. Verfahren (300) nach Anspruch 7,
wobei die Lötverbindung mittels eines Hartlötverfahrens hergestellt wird.

9. Verfahren (300) nach Anspruch 7 oder 8,
wobei die Schweißverbindung mittels Reibschweißen hergestellt wird.

10. Verfahren nach einem der Ansprüche 7 bis 9,
wobei die für das Herstellen der Lötverbindung benötigte Temperatur durch das Herstellen der Schweißverbindung bereitgestellt wird.

11. Verfahren nach einem der Ansprüche 7 bis 10,
wobei vor dem Herstellen der Lötverbindung der zweite Verbindungsabschnitt (129) mit einem Lötüberzug versehen wird.

12. Verfahren nach einem der Ansprüche 7 bis 11,
wobei vor dem Herstellen der Schweißverbindung eine Stirnfläche (121) des zumindest einen Käfigstabs (120) mit einer Stirnfläche (121) des Kurzschlussrings (110A) bündig angeordnet wird.

## Claims

1. Squirrel cage (100) for a squirrel-cage rotor, the squirrel cage (100) having:
a plurality of cage rods (120), which extend in the axial direction (101) of the squirrel cage;
a first short-circuit ring (110A);
at least one cage rod (120) of the plurality of cage rods (120) being connected at a first end (122A) to the first short-circuit ring (110A) via a mechanical connection (127);
**characterized in that**
the mechanical connection (127) of at least one cage rod (120) of the plurality of cage rods (120) to the first short-circuit ring (110A) has a first connecting section (128) and a second connecting section (129);
wherein the first connecting section (128) is a welded connection and the second connecting section (129) is a brazed connection.

2. Squirrel cage (100) according to Claim 1,
wherein the first connecting section (128) is arranged in the axial direction (101) between the second connecting section (129) and an end face (121) of the first end (122A) of the at least one cage rod (120).

3. Squirrel cage (100) according to either of Claims 1 and 2,
wherein the second connecting section (129) directly adjoins the first connecting section (128) in the axial direction (101) of the cage rod (120).

4. Squirrel cage (100) according to one of the preceding claims,
wherein the first connecting section (128) directly adjoins an end face (121) of the first end (122A) of the at least one cage rod (120).

5. Squirrel cage (100) according to one of the preceding claims,
wherein one end face (111) of the first short-circuit ring (110A) ends flush with an end face (121) of the first end (122A) of the at least one cage rod (120) in the axial direction (101).

6. Squirrel cage (100) according to one of the preceding claims,
wherein the mechanical connection (127) is made in such a way that a connecting surface (130) of a circumferential surface (123) of the at least one cage rod (120) is connected integrally to a joining section (140) of an inner surface (116) in a cut-out (115) in the first short-circuit ring (110A).

7. Method (300) for producing a squirrel cage (100) for a squirrel-cage rotor, the method having:
arranging at least one cage rod (120) in a cut-out (115) in a short-circuit ring (110A);
producing a brazed connection between the at least one cage rod (120) and the short-circuit ring (110A) in a second connecting section (129);
producing a welded connection between the at least one cage rod (120) and the short-circuit ring (110A) in a first connecting section (128).

8. Method (300) according to Claim 7,
wherein the brazed connection is produced by means of a brazing method.

9. Method (300) according to Claim 7 or 8,
wherein the welded connection is produced by means of frictional welding.

10. Method according to one of Claims 7 to 9,
wherein the temperature needed for the production of the brazed connection is provided by the production of the welded connection.

11. Method according to one of Claims 7 to 10,
wherein, before the production of the brazed connection, the second connecting section (129) is provided with a solder covering.

12. Method according to one of Claims 7 to 11,
wherein, before the production of the welded connection, an end face (121) of the at least one cage rod (120) is arranged flush with an end face (121) of the short-circuit ring (110A).

## Revendications

1. Cage en court-circuit (100) pour un rotor en court-circuit, la cage en court-circuit (100) présentant :
- une pluralité de barreaux de cage (120) qui se prolongent dans la direction axiale (101) de la cage en court-circuit ;
- une première bague en court-circuit (110A) ;
où tout au moins un barreau de cage (120) de la pluralité des barreaux de cage (120) est raccordé à la première bague en court-circuit (110A), au niveau d'une première extrémité (122A), par l'intermédiaire d'une connexion (127) mécanique ;
**caractérisée en ce que**
la connexion (127) mécanique de tout au moins un barreau de cage (120) de la pluralité des barreaux de cage (120) présente une première section de liaison (128) et une deuxième section de liaison (129) avec la première bague en court-circuit (110A) ;
la première section de liaison (128) étant une liaison par soudure et la deuxième section de liaison (129) étant une liaison par brasage.

2. Cage en court-circuit (100) selon la revendication 1,
où la première section de liaison (128) est disposée dans la direction (101) axiale entre la deuxième section de liaison (129) et une surface frontale (121) de la première extrémité (122A) du tout au moins un barreau de cage (120).

3. Cage en court-circuit (100) selon l'une des revendications 1 ou 2,
où la deuxième section de liaison (129) est directement attenante à la première section de liaison (128), dans la direction (101) axiale du barreau de cage (120).

4. Cage en court-circuit (100) selon l'une des revendications précédentes,
où la première section de liaison (128) est directement attenante à une surface frontale (121) de la première extrémité (122A) du tout au moins un barreau de cage (120).

5. Cage en court-circuit (100) selon l'une des revendications précédentes,
où une surface frontale (111) de la première bague en court-circuit (110A) est en affleurement avec une surface frontale (121) de la première extrémité (122A) du tout au moins un barreau de cage (120) dans la direction axiale (101).

6. Cage en court-circuit (100) selon l'une des revendications précédentes,
où la connexion (127) mécanique est exécutée de telle sorte qu'une surface de connexion (130) d'une surface de gaine (123) du tout au moins un barreau de cage (120) établit une liaison, par engagement positif avec la manière, avec une section de jonction (140) d'une surface intérieure (116) dans une cavité (115) de la première bague en court-circuit (110A).

7. Procédé (300) destiné à la fabrication d'une cage en court-circuit (100) pour un rotor en court-circuit, lequel procédé présente :
- la mise en place de tout au moins un barreau de cage (120) dans une cavité (115) d'une bague en court-circuit (110A) ;
- la réalisation d'une liaison par brasage entre le tout au moins un barreau de cage (120) et la bague en court-circuit (110A) dans une deuxième section de liaison (129) ;
- la réalisation d'une liaison par soudure entre le tout au moins un barreau de cage (120) et la bague en court-circuit (110A) dans une première section de liaison (128).

8. Procédé (300) selon la revendication 7,
où la liaison par brasage est réalisée au moyen d'un procédé de brasage fort.

9. Procédé (300) selon la revendication 7 ou 8,
où la liaison par soudure est réalisée au moyen d'un soudage par friction.

10. Procédé selon l'une des revendications 7 à 9,
où la température requise pour la réalisation de la liaison par brasage est fournie par la réalisation de la liaison par soudure.

11. Procédé selon l'une des revendications 7 à 10,
où la deuxième section de liaison (129) est pourvue d'un enrobage de brasage avant la réalisation de la liaison par brasage.

12. Procédé selon l'une des revendications 7 à 11,
où une surface frontale (121) du tout au moins un barreau de cage (120) est disposée en affleurement avec une surface frontale (121) de la bague en court-circuit (110A), avant la réalisation de la liaison par soudure.
